# EUROPEAN PATENT SPECIFICATION

(11) **EP 3 247 482 B1**
(45) Date of publication and mention of the grant of the patent: **25.03.2020**
(21) Application number: 16709565.2
(22) Date of filing: 15.01.2016
(51) Int. Cl.: B01D 35/027, B01D 35/147, B01D 36/00, B01D 29/21, B01D 29/58

(54) **AIR AND OIL FILTER IN AN OIL INLET OF AN OIL TANK**
LUFT- UND ÖLFILTER IM ÖLEINLASS EINES ÖLTANKS
FILTRE À HUILE ET À AIR DANS L'ENTRÉE D'HUILE D'UN RÉSERVOIR

(30) Priority: 19.01.2015 IT BO20150015
(43) Date of publication of application: 29.11.2017
(73) Proprietor: Interpump Hydraulics S.p.A., 40012 Calderara di Reno (Bologna) (IT)
(72) Inventor: PRAMPOLINI, Silvano, 41030 Bomporto (Modena) (IT); MUNERATI, Luca, 44012 Bondeno (Ferrara) (IT); LANDUZZI, Daniele, 40010 Bentivoglio (Bologna) (IT)
(74) Representative: Dall'Olio, Christian
(86) International application number: PCT/IB2016/050186
(87) International publication number: WO 2016/116838

(56) References cited:
- EP-A1- 0 773 053
- EP-A1- 2 377 591
- DE-A1- 2 235 246
- DE-A1- 19 541 962
- US-A- 5 660 726

## Description

### FIELD OF THE INVENTION

The present invention relates to the technical sector concerning an air and oil filter group. In particular, the invention relates to an air and oil filter group, couplable to a wall of an oil tank at an oil inlet through-hole made in the wall of the oil tank.

### DESCRIPTION OF THE PRIOR ART

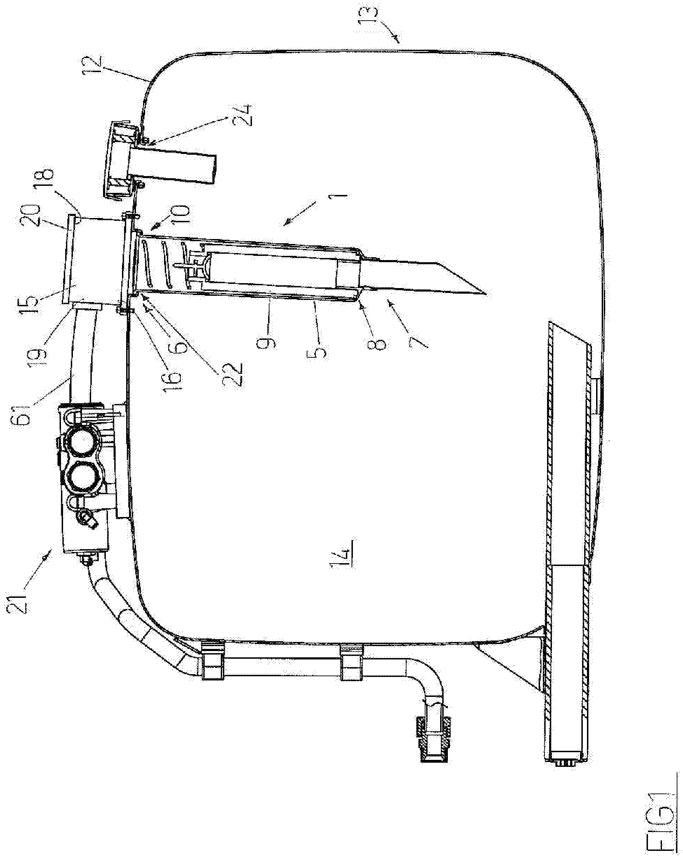

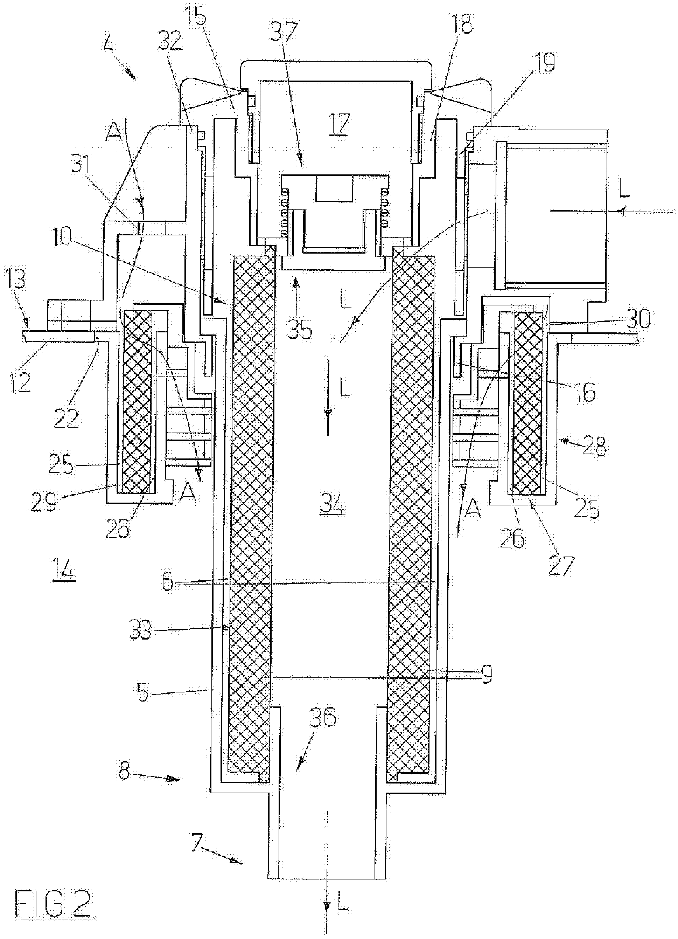

A hydraulic plant of known type can comprise: a hydraulic user; a hydraulic pump; a directional control valve which is connected to the hydraulic user and to the hydraulic pump; an oil tank in which a through-hole is made for inlet of the oil, connected to the directional control valve, and wherein a through-hole for collecting the oil and an air passage through-hole is made, connected to the aspirating intake of the hydraulic pump; an oil filter comprising an oil filter element and a housing of the oil filter element for receiving the oil filter element, which oil filter is usually inserted at the oil inlet through-hole; and an air filter comprising an air filter element and a housing for the air filter element for receiving the air filter element, which air filter is inserted at the air passage through-hole, additionally realised in a wall of the oil tank, or is arranged at the oil inlet through-hole, as will be clarified in the following with reference to the prior art illustrated respectively in figures 1, 2. The hydraulic plant can be mounted on-board a road tractor and the hydraulic user can be mounted on-board a trailer drawn by the road tractor; the trailer, for example, can bear a tipper which is mobile in rotation to release gravel, sand or other materials loaded on the tipper, and the hydraulic user can be a single-acting cylinder which activates the rotation of the tipper.

A first hydraulic plant of known type is partly illustrated in figure 1 (the hydraulic pump, the hydraulic user and some connections have not been illustrated) and comprises an oil filter group (1) which in turn comprises the oil filter. The housing (5) of the oil filter element (9) comprises: an oil inlet (6); an oil outlet (7); a first seating (8) for receiving an oil filter element (9), which first seating (8) is arranged so that the oil coming from the oil inlet (6) can be filtered by the oil filter element (9) and be conveyed towards the oil outlet (7); a first opening (10) which is dimensioned so as to enable insertion and extraction of the oil filter element (9) into and from the first seating (8). The housing (5) of the oil filter element (9) is insertable through the oil inlet through-hole (22) so that the oil outlet (7) is in communication with a chamber (14) of the oil tank (13).

Further, the oil filter group (1) comprises a hollow body (15) which: internally forms a chamber (not illustrated); is provided with a first conduit (16) which originates from the chamber (17) of the hollow body (15) and which is in communication with outside the hollow body (15); is provided with a second conduit (18) which originates from the chamber (17) of the hollow body (15) and which is in communication with outside the hollow body (15); is provided with a third conduit (19) which originates from the chamber (17) of the hollow body (15) and which is in communication with outside the hollow body (15) in order to make possible a supply of oil through the chamber (17) of the hollow body (15) and towards the first conduit (16). The first conduit (16) and the second conduit (18) are facing one another. the first conduit (16), the second conduit (18) and the chamber (17) of the hollow body (15) are dimensioned and arranged with respect to one another in such a way that the oil filter element (9) can pass respectively through the second conduit (18), the chamber (17) of the hollow body (15) and the first conduit (16), and vice versa. The hollow body (15) is fixable to the wall (12) of the oil tank (13) at the oil inlet through-hole (22) so that the first conduit (16) is in communication with the first opening (10) of the housing (5) of the oil filter element (9) and with the oil inlet (6) of the housing (5) of the oil filter element (9) when the housing (5) of the oil filter element (9) is inserted through the oil inlet through-hole (22) of the oil tank (13), making possible insertion of the oil filter element (9) in the first seating (8) of the housing (5) of the oil filter element (9) respectively through the second conduit (18), the second chamber (17) of the hollow body (15) and the first conduit (16), and making possible extraction of the oil filter element (9) from the first seating (8) of the housing (5) of the oil filter element (9) respectively through the first conduit (16), the second chamber (17) of the hollow body (15) and the second conduit (18).

The second conduit (18) is normally closed by a removable cap (20).

The directional control valve (21) is fixed to the upper wall (12) of the oil tank (13) and is connected to the third conduit (19) of the hollow body (15) via a tubing (61).

As specified, a further through-hole for air passage (24) is made in the oil tank (13), which places the chamber (14) of the oil tank (13) in communication with the atmosphere: in this way, if the quantity of oil contained in the oil tank (13) diminishes (i.e. if the collection of oil from the oil tank (13) is greater than the inlet of oil (13)) air is sourced from outside by effect of a momentary reduction of pressure of the air contained in the chamber (14) of the oil tank (13), and vice versa in a case in which the quantity of oil contained in the oil container (13) increases.

The air filter (28, 29) is arranged at the through-hole for air passage (24) for filtering air in inlet to the chamber (14) of the oil tank (13).

A second hydraulic plant of the prior art is different from the first, discussed in the foregoing, due to the fact that the air filter (28, 29) and the oil filter (5, 9) are integrated in a single air and oil filter group (4) which is coupled to the wall (12) of the oil tank (13) only at the oil inlet through-hole (22); the through-hole for air passage is therefore superfluous and is not realised.

Figure 2 illustrates only the air and oil filter group (4) which is a part of the second hydraulic plant; the characteristics of figure 2 that are in common with the characteristics of figure 1 have the same numerical references.

The housing (28) of the air filter element (29), comprises: an air inlet (25); an air outlet (26); a second seating (27) for receiving an air filter element (29), which second seating (27) is arranged such that the air coming from the air inlet (25) can be filtered by the air filter element (29) and be conveyed towards the air outlet (26); a second opening (30) which is dimensioned for enabling insertion and extraction of the air filter element (29) into and out of the second seating (27).

The housing (28) of the air filter element (29) is also insertable through the oil inlet through-hole (22) so that the oil outlet (26) is in communication with a chamber (14) of the oil tank (13).

The air filter element (29) has a tubular shape. The housing (28) of the air filter element (29) also has a tubular shape and is dimensioned so as to enable insertion thereof, along the axis thereof, in the housing (5) of the oil filter element (9); therefore the housing (28) of the air filter element (29) and the housing (5) of the oil filter element (9) are concentric to one another, arranged below the hollow body (15) and internally of the chamber (14) of the oil oil tank (13).

The hollow body (15) forms an external collar (32) provided with air openings (31) which place the air inlet (25) of the housing (28) of the air filter element (29) in communication with the outside environment.

The arrows denoted by (A) indicate the pathway followed by the air through the air openings (31) of the collar (32), the air inlet (25), the air filter element (29), the air outlet (26) and the chamber (14) of the oil tank (13).

The oil filter element (9) is tubular and is provided with a filter wall (33) and an internal chamber (34) communicating with the outside environment via a first mouth (35) and a second mouth (36). The second mouth (36) is connected to the oil outlet (7); the first mouth (35) is facing towards the oil inlet (6). The oil is filtered by passing through the filter wall (33) of the oil filter element (9).

The air and oil filter group (4) further comprises a by-pass valve (37) which seals the first mouth (35) and intervenes only when the oil pressure contained in the chamber (17) of the hollow body (15) exceeds a certain value, due to the reduction of the filtering capacity of the oil filter element (9): in this case the oil bypasses the filter wall (33) of the oil filter element (9) and is conveyed from the first conduit (16) of the hollow body (15) through the first mouth (35), the chamber (34) of the oil filter element (9), the second mouth (36) and the oil outlet (7).

The arrows denoted by reference letter (L) indicate the pathway followed by the oil coming from the directional control valve (21) (not illustrated) through the third conduit (19), the chamber (17) of the hollow body (15), the first conduit (16), the oil inlet (6), the oil filter element (9), the oil outlet (7) and the chamber (14) of the oil tank (13).

Therefore, the oil inlet through-hole (22) must be of adequate dimensions in order to enable insertion of the housing (28) of the air filter element (29) and the housing (5) of the oil filter element (9); however, the dimensions of the oil inlet through-hole (22) must be limited, so as to avoid excessive weakening of the oil tank (13). As a consequence, this makes an oil filter element (9) of small dimensions necessary, which constitutes a limit to the oil flow rate conveyed into the oil tank (13).

Further, in order to extract the air filter element (29) (for example for the purpose of replacing or maintaining it) it is necessary to demount the hollow body (15) from the oil tank (13), which requires a certain amount of time. The first hydraulic plant of the prior art makes access (for carrying out a maintenance or replacement operation) to the oil filter element (9) and the air filter element (29) simple and easy.

The second hydraulic plant of the prior art is more compact than the first hydraulic plant and makes the air-passage through-hole superfluous: this enables a rapid installation. On the other hand, access to the air filter element (29) is not easy, as it is necessary to demount the hollow body (15); further, the oil filter element (9) is smaller.

DE 195 41 962 A1 discloses a replaceable oil and air filter element for a fuel tank.

### SUMMARY OF THE INVENTION

The aim of the present invention consists in obviating the above-described drawbacks with reference to a first hydraulic plant and a second hydraulic plant.

The above aim has been attained with an air and oil filter group, couplable to a wall of an oil tank at an oil inlet through-hole made in the wall of the oil tank, in accordance with claim 1.

The housing (28) of the air filter element (29) is arranged in the second chamber (17) of the hollow body (15), so that when the air filter element (29) is inserted in the housing (28) of the air filter element (29), the air can flow through the second conduit (18), the air inlet (25), the air filter element (29) (by which it is filtered), the air outlet (26), the fourth conduit (39), the by-pass conduit (40) and the chamber (14) of the oil tank (13). An air passage through-hole is therefore superfluous. Further, the position of the housing (28) of the air filter element (29) does not influence the dimensions of oil inlet through-hole (22) and therefore there are no limitations to the dimensions that the oil filter element (9) can have.

Access to the housing (28) of the air filter element (29) is easy as it is made possible by the second conduit (18): the maintenance or replacement of the air filter element (29) is therefore simple and rapid and does not require the demounting of the hollow body (15).

Access to the housing (5) of the oil filter element (9) is also easy as it is made possible through the second conduit (18), the second chamber (17) of the hollow body (15) and the first conduit (16): in fact it is sufficient to first remove the housing (28) of the air filter element (29) when it is removably coupled to the chamber (17) of the hollow body (15). For example, the housing (28) of the air filter element (29) externally forms a threading, while a corresponding portion of wall which delimits the chamber (17) of the hollow body (15) forms a threaded seating so that it is possible to helically couple the housing (28) of the air filter element (29) with the hollow body (15); unscrewing and screwing, time by time, the housing (28) of the air filter element (29) from and into the hollow body (15) is therefore a simple and rapid operation which can be carried out even by non-qualified personnel.

### BRIEF DESCRIPTION OF THE DRAWINGS

Specific embodiments of the invention will be described in the following with reference to the present description, according to what is set down in the claims and with the aid of the appended tables of drawings, in which:
- figure 1 is a schematic section view of a part of a first hydraulic plant of the prior art, discussed in the foregoing;
- figure 2 is a schematic section view of a part of an air and oil filter group that is a part of the second hydraulic plant of known type, discussed in the foregoing;
- figure 3 is an exploded perspective view of a directional control valve group comprising an air and oil filter group, both objects of the present invention;
- figures 4 and 5 are respectively a perspective view and a lateral view of the housing of the air filter element illustrated in figure 3;
- figure 6 is a schematic section view of the directional control valve group (21) of figure 3.

### DESCRIPTION OF THE PREFERRED EMBODIMENTS

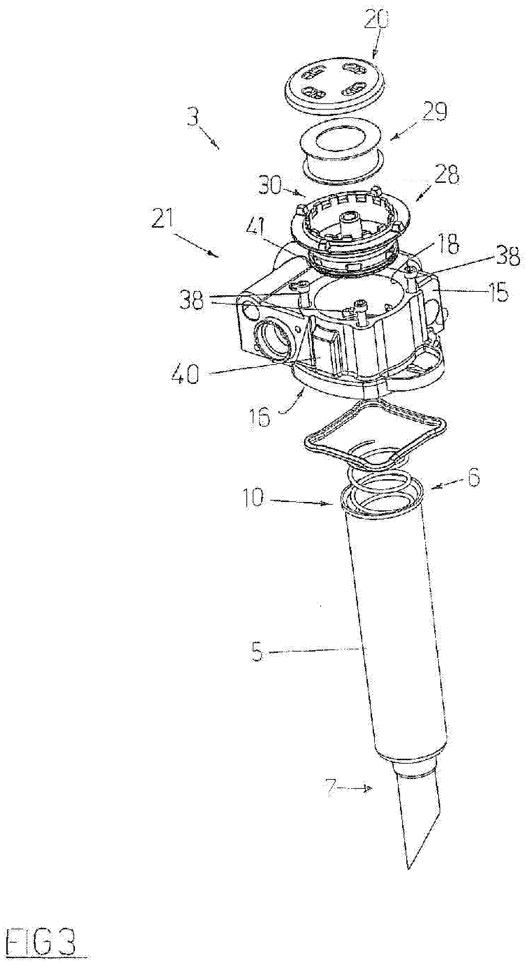

With reference to figures 3-6 the air and oil filter group (3) of the present invention is denoted by reference numeral (3). The characteristics of the air and oil filter group (3) that are in common with the characteristics already mentioned in reference to the first and the second hydraulic plant of known type (figures 1, 2) have the same reference numerals.

The air and oil filter group (3) is couplable to a wall (12) of an oil tank (13) at an oil inlet through-hole (22) made in the wall (12) of the oil tank (13).

The air and oil filter group (3) comprises a housing (5) of an oil filter element (9), which: comprises an oil inlet (6); comprises an oil outlet (7); comprises a first seating (8) for receiving an oil filter element (9), which first seating (8) is arranged such that the oil coming from the oil inlet (6) can be filtered by the oil filter element (9) and be conveyed towards the oil outlet (7); comprises a first opening (10) which is dimensioned so as to enable insertion and extraction of the oil filter element (9) into and out of the first seating (8); is insertable through the inlet through-hole of the oil (22) in such a way that the oil outlet (7) is in communication with a chamber (14) of the oil tank (13).

Further the air and oil filter group (3) comprises a housing (28) of an air filter element (29), comprising: an air inlet (25); an air outlet (26); a second seating (27) for receiving an air filter element (29), which second seating (27) is arranged such that the air coming from the air inlet (25) can be filtered by the air filter element (29) and be conveyed towards the air outlet (26); a second opening (30) which is dimensioned for enabling insertion and extraction of the air filter element (29) into and out of the second seating (27).

Further the air and oil filter group (3) comprises a hollow body (15) which: internally forms a chamber; is provided with a first conduit (16) which originates from the chamber (17) of the hollow body (15) and which is in communication with outside the hollow body (15); is provided with a second conduit (18) which originates from the chamber (17) of the hollow body (15) and which is in communication with outside the hollow body (15); is provided with a third conduit (19) which originates from the chamber (17) of the hollow body (15) and which is in communication with outside the hollow body (15) in order to make possible a supply of oil through the chamber (17) of the hollow body (15) and towards the first conduit (16).

The first conduit (16) and the second conduit (18) are facing one another.

The first conduit (16), the second conduit (18) and the chamber (17) of the hollow body (15) are dimensioned and arranged with respect to one another in such a way that the oil filter element (9) can pass respectively through the second conduit (18), the chamber (17) of the hollow body (15) and the first conduit (16), and vice versa.

The hollow body (15) is fixable to the wall (12) of the oil tank (13) at the through-hole for introduction of the oil (22), so that the first conduit (16) is in communication with the first opening (10) of the housing (5) of the oil filter element (9) and with the oil inlet (6) of the housing (5) of the oil filter element (9) when the housing (5) of the oil filter element (9) is inserted through the through-hole for introduction of the oil (22) of the oil tank (13), making possible insertion of the oil filter element (9) in the first seating (8) of the housing (5) of the oil filter element (9) respectively through the second conduit (18), the chamber (17) of the hollow body (15) and the first conduit (16), and making possible extraction of the oil filter element (9) from the first seating (8) of the housing (5) of the oil filter element (9) respectively through the first conduit (16), the chamber (17) of the hollow body (15) and the second conduit (18).

The hollow body (15) is provided with a fourth conduit (39) which originates from the chamber (17) of the hollow body (15) and which is in communication with outside the hollow body (15).

The hollow body (15) and the housing (28) of the air filter element (29) are dimensioned with respect to one another so that: the housing (28) of the air filter element (29) can be inserted in and extracted from the chamber (17) of the hollow body (15) through the second conduit (18); when the housing (28) of the air filter element (29) is inserted in the chamber (17) of the hollow body (15), the housing (28) of the air filter element (29) is removably couplable to the hollow body (15) such that the air inlet (25) is in communication with the second conduit (18), the air outlet (26) is in communication with the fourth conduit (39) and the second opening (30) is in communication with the second conduit (18), enabling the air filter element (29) to be inserted in, and extracted from, the second seating (27) of the housing (28) of the air filter element (29) through the second conduit (18).

The air and oil filter group (3) further comprises a bypass conduit (40) for placing the fourth conduit (39) in fluid communication with the chamber (14) of the oil tank (13).

The air and oil filter group (4) is defined that comprises: the above-mentioned air and oil filter group (3); the oil filter element (9); and the air filter element (29).

It is specified that for the functioning of the hydraulic plant in which the air and oil filter group (3) is integrated, it is not necessary for the oil filter element (9) and the air filter element (29) to be present: the presence of these two members is without doubt preferable but not necessary, so a user can avoid the use of the air filter element (29) and/or the oil filter element (9).

The hollow body (15) is fixable to the wall (12) of the oil tank (13) by fixing screws (38) (for example four screws).

The housing (5) of the oil filter element can be formed as a container.

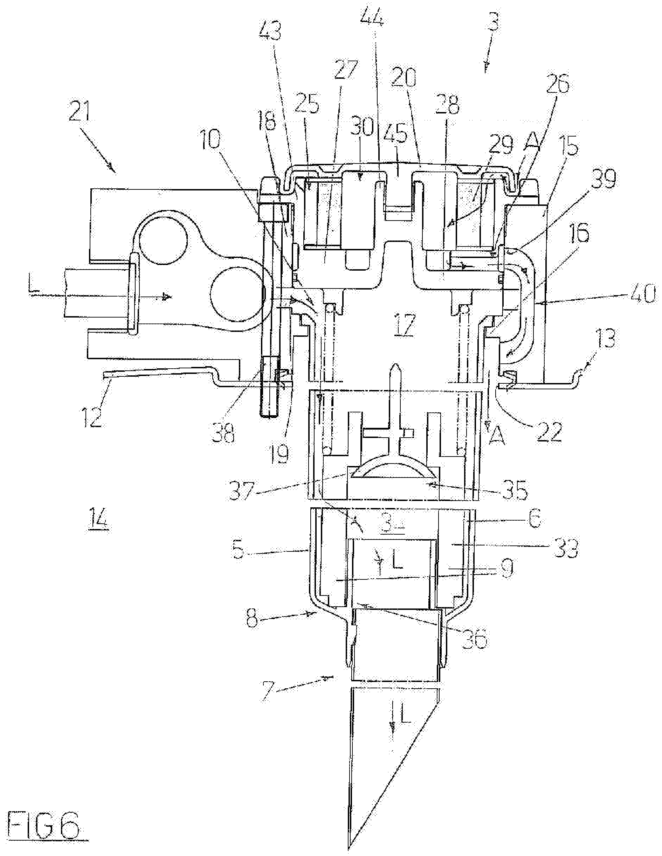

The first opening (10) can coincide with the oil inlet (6) (figure 6). The housing (5) of the oil filter element (9) can be borne by the hollow body (15).

The housing (5) of the oil filter element (9) can be only partially inserted in the oil inlet through-hole (22) (figure 6).

By way of example, the oil filter element (9) is tubular and is provided with a filter wall (33) and an internal chamber (34) communicating with the outside environment via a first mouth (35) and a second mouth (36). The second mouth (36) is connected to the oil outlet (7); the first mouth (35) is facing towards the oil inlet (6). The oil is filtered by passing through the filter wall (33) of the oil filter element (9).

The air and oil filter group (4) can further comprise a by-pass valve (37) which seals the first mouth (35) and intervenes only when the oil pressure contained in the chamber (17) of the hollow body (15) exceeds a certain value, due to the reduction of the filtering capacity of the oil filter element (9): in this case the oil bypasses the filter wall (33) of the oil filter element (9) and is conveyed from the first conduit (16) of the hollow body (15) through the first mouth (35), the chamber (34) of the oil filter element (9), the second mouth (36) and the oil outlet (7).

The arrows denoted by reference letter (L) indicate the pathway followed by the oil coming from the directional control valve (21) through the third conduit (19), the chamber (17) of the hollow body (15), the first conduit (16), the oil inlet (6), the oil filter element (9), the oil outlet (7) and the chamber (14) of the oil tank (13).

To top up or fill the oil tank (13) it is sufficient to remove the housing (28) of the air filter element (29) and supply the oil through the second conduit (18), the second chamber (17) of the hollow body (15) and the first conduit (16).

The hollow body (15) and the housing (28) of the air filter element (29) are preferably reciprocally dimensioned such that the presence of the housing (28) of the air filter element (29) in the chamber (17) of the hollow body (15) does not compromise the passage of oil from the third conduit (19) to the first conduit (16).

The housing (28) of the air filter element (29) is preferably provided with an external threading (not illustrated), and the hollow body (15) is provided with a nut screw (not illustrated) at the chamber (17) of the hollow body (15) for coupling with the external threading (41), such that the housing (28) of the air filter element (29) is screwable and unscrewable to and from the chamber (17) of the hollow body (15). This makes the removal of the housing (28) of the air filter element (29) very simple and rapid when it becomes necessary for example to access the oil filter element (9) (for carrying out maintenance or replacement thereof) or for topping up or filling the oil tank (13).

The hollow body (15) and the housing (28) of the air filter element (29) are preferably reciprocally dimensioned such that when the housing (28) of the air filter element (29) is coupled to the hollow body (15), the housing (28) of the air filter element (29) occludes the second conduit (18); further, the air and oil filter group (3) comprises a cap (20) removably couplable to the housing (28) of the air filter element (29) so as to access the air filter element (29) when the air filter element (29) is arranged in the housing (28) of the air filter element (29). The housing (28) of the air filter element (29) thus prevents dirt and impurities from entering the chamber (17) of the hollow body (15), functioning as a removable closure element for the second conduit (18). The cap (20) and the housing (28) of the air filter element (29) can both be conformed for defining the air inlet (25); in this case the presence of the cap (20) is necessary, including in the absence of the air filter element (29).

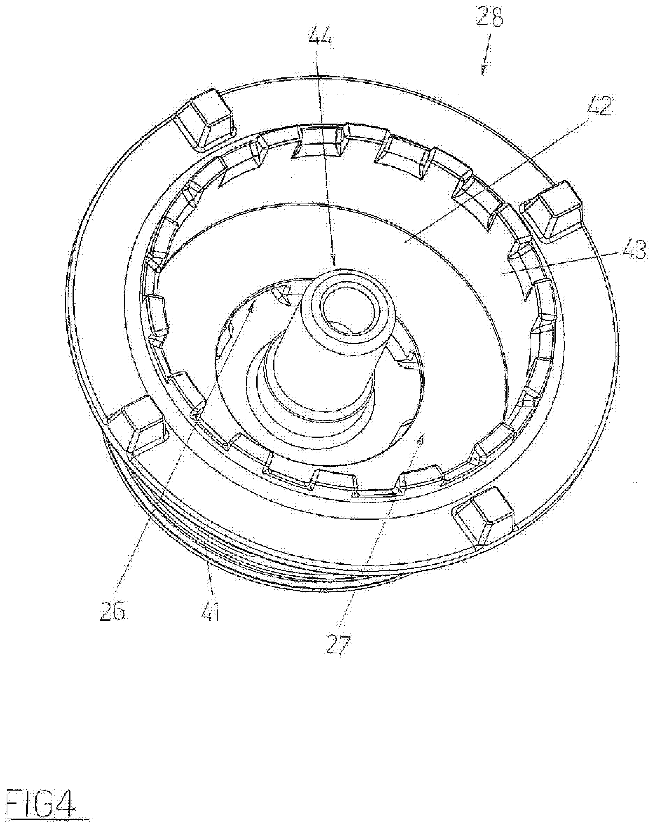

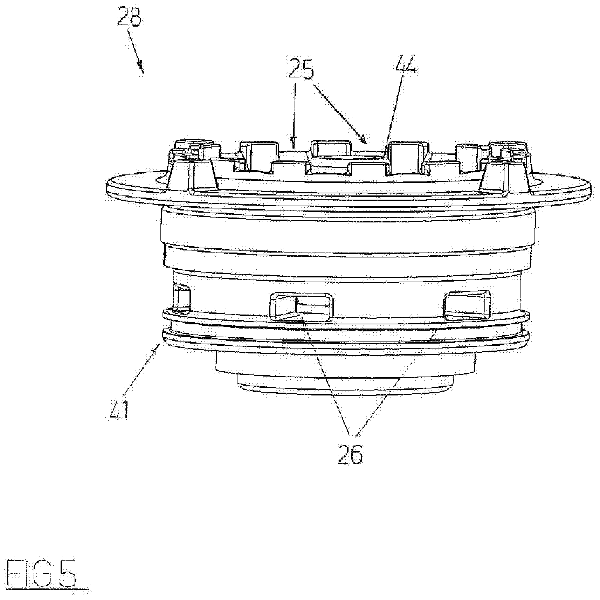

In the example illustrated in the figures, the housing (28) of the air filter element (29) substantially has a beaker shape and comprises (figures 4 and 5): a base (42), a lateral wall (43) that is substantially cylindrical and connected to the base (42); and a central portion (44) which develops internally from the base (42), faces the cylindrical lateral wall (43) and is provided with a threaded seating. The cap (20) centrally exhibits a threaded shank (45) for coupling with the threaded seating (figure 6) and is conformed so as to abut the air filter element (29) when the air filter element (29) is arranged in the housing (28) of the air filter element (29). The air filter element (29) in this case has a tubular shape (see figure 6).

The fourth conduit (39) is preferably identified in the bypass conduit (40) and is fashioned in the hollow body (15). As a consequence the air and oil filter group (3) is more compact.

The invention also relates to a directional control valve group (21), comprising an air and oil filter group (3) as described in the foregoing and a directional control valve group (21).

The directional control valve (21) is preferably fixed to the hollow body (15): in this case the body of the directional control valve (21) can be made of cast iron (by casting) for supporting the high pressures of the circulating oil, while the hollow body (15) can be made of aluminium (for example by die casting) and is therefore lighter.

Alternatively the directional control valve (21) is in a single body with the hollow body (15); in this case the body of the directional control valve (21) and the hollow body (15) can be made by a single casting, and the material they are made of is preferably cast iron.

## Claims

1. An air and oil filter group (3), couplable to a wall of an oil tank (13) at a through-hole for inlet of the oil (22) made in the wall (12) of the oil tank (13), wherein:
the group (3) comprises a housing (5) of an oil filter element (9), which: comprises an oil inlet (6); comprises an oil outlet (7); comprises a first seating (8) for receiving an oil filter element (9), which first seating (8) is arranged such that the oil coming from the oil inlet (6) can be filtered by the oil filter element (9) and be conveyed towards the oil outlet (7); comprises a first opening (10) which is dimensioned so as to enable insertion and extraction of the oil filter element (9) into and out of the first seating (8); is insertable through the inlet through-hole of the oil (22) in such a way that the oil outlet (7) is in communication with a chamber (14) of the oil tank (13);
the group (3) comprises a housing (28) of an air filter element (29), comprising: an air inlet (25); an air outlet (26); a second seating (27) for receiving an air filter element (29), which second seating (27) is arranged such that the air coming from the air inlet (25) can be filtered by the air filter element (29) and be conveyed towards the air outlet (26); a second opening (30) which is dimensioned for enabling insertion and extraction of the air filter element (29) into and out of the second seating (27);
the group (3) comprises a hollow body (15) which: internally forms a chamber (17); is provided with a first conduit (16) which originates from the chamber (17) of the hollow body (15) and which is in communication with outside the hollow body (15); is provided with a second conduit (18) which originates from the chamber (17) of the hollow body (15) and which is in communication with outside the hollow body (15); is provided with a third conduit (19) which originates from the chamber (17) of the hollow body (15) and which is in communication with outside the hollow body (15) in order to make possible a supply of oil through the chamber (17) of the hollow body (15) and towards the first conduit (16);
the first conduit (16) and the second conduit (18) are facing one another;
the first conduit (16), the second conduit (18) and the chamber (17) of the hollow body (15) are dimensioned and arranged with respect to one another in such a way that the oil filter element (9) can pass respectively through the second conduit (18), the chamber (17) of the hollow body (15) and the first conduit (16), and vice versa;
the hollow body (15) is fixable to the wall (12) of the oil tank (13) at the through-hole for introduction of the oil (22), so that the first conduit (16) is in communication with the first opening (10) of the housing (5) of the oil filter element (9) and with the oil inlet (6) of the housing (5) of the oil filter element (9) when the housing (5) of the oil filter element (9) is inserted through the through-hole for introduction of the oil (22) of the oil tank (13), making possible insertion of the oil filter element (9) in the first seating (8) of the housing (5) of the oil filter element (9) respectively through the second conduit (18), the chamber (17) of the hollow body (15) and the first conduit (16), and making possible extraction of the oil filter element (9) from the first seating (8) of the housing (5) of the oil filter element (9) respectively through the first conduit (16), the chamber (17) of the hollow body (15) and the second conduit (18);
the hollow body (15) is provided with a fourth conduit (39) which originates from the chamber (17) of the hollow body (15) and which is in communication with outside the hollow body (15);
the hollow body (15) and the housing (28) of the air filter element (29) are dimensioned with respect to one another so that: the housing (28) of the air filter element (29) can be inserted in and extracted from the chamber (17) of the hollow body (15) through the second conduit (18); when the housing (28) of the air filter element (29) is inserted in the chamber (17) of the hollow body (15), the housing (28) of the air filter element (29) is removably couplable to the hollow body (15) such that the air inlet (25) is in communication with the second conduit (18), the air outlet (26) is in communication with the fourth conduit (39) and the second opening (30) is in communication with the second conduit (18), enabling the air filter element (29) to be inserted in, and extracted from, the second seating (27) of the housing (28) of the air filter element (29) through the second conduit (18);
the group (3) comprises a bypass conduit (40) for placing the fourth conduit (39) in fluid communication with the chamber (14) of the oil tank (13);
the housing (28) of the air filter element (29) is provided with an external threading;
comprises a cap (20) removably couplable to the housing (28) of the air filter element (29) so as to access the air filter element (29) when the air filter element (29) is arranged in the housing (28) of the air filter element (29);
**characterised in that**:
the hollow body (15) is provided with a nut screw at the chamber (17) of the hollow body (15) for coupling with the external threading, such that the housing (28) of the air filter element (29) is screwable and unscrewable to and from the chamber (17) of the hollow body (15);
the hollow body (15) and the housing (28) of the air filter element (29) are reciprocally dimensioned such that when the housing (28) of the air filter element (29) is coupled to the hollow body (15), the housing (28) of the air filter element (29) occludes the second conduit (18).

2. The group of claim 1, wherein the fourth conduit (39) is identified in the bypass conduit (40) and is fashioned in the hollow body (15).

3. A directional control valve group (21), comprising a group for filtering air and oil according to any one of the preceding claims, and a directional control valve (21), the directional control valve (21) being fixed to the hollow body (15) or being in a single piece with the hollow body (15).

## Patentansprüche

1. Luft- und Ölfiltergruppe (3), die an einem Durchgangsloch zum Einlassen des Öls (22), das in einer Wand (12) eines Öltanks (13) erzeugt wurde, an die Wand des Öltanks (13) koppelbar ist, wobei:
die Gruppe (3) ein Gehäuse (5) eines Ölfilterelements (9) umfasst, das: einen Öleinlass (6) umfasst; einen Ölauslass (7) umfasst; einen ersten Sitz (8) zum Aufnehmen eines Ölfilterelements (9) umfasst, wobei der erste Sitz (8) derart angeordnet ist, dass das Öl aus dem Öleinlass (6) durch das Ölfilterelement (9) gefiltert und an den Ölauslass (7) geleitet werden kann; eine erste Öffnung (10) umfasst, die derart abgemessen ist, dass sie das Einführen und Herausnehmen des Ölfilterelements (9) in den ersten Sitz (8) und aus diesem heraus ermöglicht; durch das Einlassdurchgangsloch des Öls (22) derart einführbar ist, dass der Ölauslass (7) mit einer Kammer (14) des Öltanks (13) in Verbindung steht;
die Gruppe (3) ein Gehäuse (28) eines Luftfilterelements (29) umfasst, umfassend: einen Lufteinlass (25); einen Luftauslass (26); einen zweiten Sitz (27) zum Aufnehmen eines Luftfilterelements (29), wobei der zweite Sitz (27) derart angeordnet ist, dass Luft aus dem Lufteinlass (25) durch da Luftfilterelement (29) gefiltert und zu dem Luftauslass (26) geleitet werden kann; eine zweite Öffnung (30), die derart abgemessen ist, dass sie das Einführen und Herausnehmen des Luftfilterelements (29) in den zweiten Sitz (27) und aus diesem heraus ermöglicht;
die Gruppe (3) einen Hohlkörper (15) umfasst, der: im Inneren eine Kammer (17) bildet; mit einer ersten Leitung (16) versehen ist, die von der Kammer (17) des Hohlkörpers (15) ausgeht und mit dem Äußeren des Hohlkörpers (15) in Verbindung steht; mit einer zweiten Leitung (18) versehen ist, die von der Kammer (17) des Hohlkörpers (15) ausgeht und in Verbindung mit dem Äußeren des Hohlkörpers (15) steht; mit einer dritten Leitung (19) versehen ist, die von der Kammer (17) des Hohlkörpers (15) ausgeht und mit dem Äußeren des Hohlkörpers (15) in Verbindung steht, um eine Zufuhr von Öl durch die Kammer (17) des Hohlkörpers (15) und zur ersten Leitung (16) zu ermöglichen; die erste Leitung (16) und die zweite Leitung (18) einander zugewandt sind; die erste Leitung (16), die zweite Leitung (18) und die Kammer (17) des Hohlkörpers (15) in Bezug auf einander derart abgemessen und angeordnet sind, dass das Ölfilterelement (9) jeweils durch die zweite Leitung (18), die Kammer (17) des Hohlkörpers (15) und die erste Leitung (16) und umgekehrt treten kann;
der Hohlkörper (15) an dem Durchgangsloch zum Einleiten des Öls (22) an der Wand (12) des Öltanks (13) fixierbar ist, sodass die erste Leitung (16) mit der ersten Öffnung (10) des Gehäuses (5) des Ölfilterelements (9) und mit dem Öleinlass (6) des Gehäuses (5) des Ölfilterelements (9) in Verbindung steht, wenn das Gehäuse (5) des Ölfilterelements (9) durch das Durchgangsloch zum Einleiten des Öls (22) des Öltanks (13) eingeführt ist, was das Einführen des Ölfilterelements (9) in den ersten Sitz (8) des Gehäuses (5) des Ölfilterelement (9) jeweils durch die zweite Leitung (18), die Kammer (17) des Hohlkörpers (15) und die erste Leitung (16) ermöglicht und das Herausnehmen des Ölfilterelements (9) aus dem ersten Sitz (8) des Gehäuses (5) des Ölfilterelements (9) jeweils durch die erste Leitung (16), die Kammer (17) des Hohlkörpers (15) und die zweite Leitung (18) ermöglicht;
der Hohlkörper (15) mit einer vierten Leitung (39) versehen ist, die von der Kammer (17) des Hohlkörpers (15) ausgeht und mit dem Äußeren des Hohlkörpers (15) in Verbindung steht;
der Hohlkörper (15) und das Gehäuse (28) des Luftfilterelements (29) in Bezug aufeinander derart abgemessen sind, dass: das Gehäuse (28) des Luftfilterelements (29) durch die zweite Leitung (18) in die Kammer (17) des Hohlkörpers (15) eingeführt und daraus herausgenommen werden kann; wenn das Gehäuse (28) des Luftfilterelements (29) in die Kammer (17) des Hohlkörpers (15) eingeführt ist, das Gehäuse (28) des Luftfilterelement (29) lösbar an den Hohlkörper (15) koppelbar ist, derart, dass der Lufteinlass (25) mit der zweiten Leitung (18) in Verbindung steht, der Luftauslass (26) mit der vierten Leitung (39) in Verbindung steht und die zweite Öffnung (30) mit der zweiten Leitung (18) in Verbindung steht, was es ermöglicht, das Luftfilterelement (29) durch die zweite Leitung (18) in den zweiten Sitz (27) des Gehäuses (28) des Luftfilterelements (29) einzuführen und daraus herauszunehmen;
die Gruppe (3) eine Umgehungsleitung (40) umfasst, um die vierte Leitung (39) mit der Kammer (14) des Öltanks (13) in Fluidverbindung zu setzen; das Gehäuse (28) des Luftfilterelements (29) mit einem Außengewinde versehen ist;
eine Kappe (20) umfasst, die lösbar an das Gehäuse (28) des Luftfilterelements (29) koppelbar ist, um auf das Luftfilterelement (29) zuzugreifen, wenn das Luftfilterelement (29) im Gehäuse (28) des Luftfilterelements (29) angeordnet ist;
**dadurch gekennzeichnet, dass**:
der Hohlkörper (15) mit einer Schraubmutter zum Koppeln mit dem Außengewinde an der Kammer (17) des Hohlkörpers (15) versehen ist, derart, dass das Gehäuse (28) des Luftfilterelements (29) an die Kammer (17) des Hohlkörpers (15) geschraubt und schraubend davon gelöst werden kann;
der Hohlkörper (15) und das Gehäuse (28) des Luftfilterelement (29) gegenseitig derart abgemessen sind, dass, wenn das Gehäuse (28) des Luftfilterelements (29) an den Hohlkörper (15) gekoppelt ist, das Gehäuse (28) des Luftfilterelements (29) die zweite Leitung (18) versperrt.

2. Gruppe nach Anspruch 1, wobei die vierte Leitung (39) in der Umgehungsleitung (40) identifiziert ist und im Hohlkörper (15) ausgebildet ist.

3. Richtungssteuerungsventilgruppe (21), umfassend eine Gruppe zum Filtern von Luft und Öl nach einem der vorangehenden Ansprüche und ein Richtungssteuerungsventil (21), wobei das Richtungssteuerungsventil (21) am Hohlkörper (15) fixiert ist oder einstückig mit dem Hohlkörper (15) ist.

## Revendications

1. Un groupe de filtration d'air et d'huile (3), pouvant être accouplé à une paroi d'un réservoir d'huile (13) au niveau d'un trou traversant d'entrée de l'huile (22) réalisé dans la paroi (12) du réservoir d'huile (13), où :
le groupe (3) comprend un logement (5) d'un élément filtrant d'huile (9), qui : comprend une entrée d'huile (6) ; comprend une sortie d'huile (7) ;
comprend un premier siège (8) pour recevoir un élément filtrant d'huile (9), ledit premier siège (8) est disposé de manière à ce que l'huile provenant de l'entrée d'huile (6) puisse être filtrée par l'élément filtrant d'huile (9) et être acheminée vers la sortie d'huile (7) ; comprend une première ouverture (10) qui est dimensionnée de manière à permettre l'insertion et l'extraction de l'élément filtrant d'huile (9) dans et hors du premier siège (8) ; peut être inséré à travers le trou traversant d'entrée de l'huile (22) de manière à ce que la sortie d'huile (7) soit en communication avec une chambre (14) du réservoir d'huile (13) ;
le groupe (3) comprend un logement (28) d'un élément filtrant d'air (29), comprenant : une entrée d'air (25) ; une sortie d'air (26) ; un deuxième siège (27) pour recevoir un élément filtrant d'air (29), ledit deuxième siège (27) est disposé de manière à ce que l'air provenant de l'entrée d'air (25) puisse être filtré par l'élément filtrant d'air (29) et être acheminé vers la sortie d'air (26) ; une deuxième ouverture (30) qui est dimensionnée de manière à permettre l'insertion et l'extraction de l'élément filtrant d'air (29) dans et hors du deuxième siège (27) ;
le groupe (3) comprend un corps creux (15) qui : forme intérieurement une chambre (17) ; est doté d'un premier conduit (16) qui part de la chambre (17) du corps creux (15) et qui est en communication avec l'extérieur du corps creux (15) ; est doté d'un deuxième conduit (18) qui part de la chambre (17) du corps creux (15) et qui est en communication avec l'extérieur du corps creux (15) ; est doté d'un troisième conduit (19) qui part de la chambre (17) du corps creux (15) et qui est en communication avec l'extérieur du corps creux (15) de manière à rendre possible une alimentation d'huile à travers la chambre (17) du corps creux (15) et vers le premier conduit (16) ;
le premier conduit (16) et le deuxième conduit (18) sont l'un en face de l'autre ;
le premier conduit (16), le deuxième conduit (18) et la chambre (17) du corps creux (15) sont dimensionnés et disposés les uns par rapport aux autres de manière à ce que l'élément filtrant d'huile (9) puisse passer respectivement à travers le deuxième conduit (18), la chambre (17) du corps creux (15) et le premier conduit (16), et inversement ;
le corps creux (15) peut être fixé à la paroi (12) du réservoir d'huile (13) au niveau du trou traversant d'introduction de l'huile (22), de manière à ce que le premier conduit (16) soit en communication avec la première ouverture (10) du logement (5) de l'élément filtrant d'huile (9) et avec l'entrée d'huile (6) du logement (5) de l'élément filtrant d'huile (9) lorsque ce même logement (5) de l'élément filtrant d'huile (9) est inséré à travers le trou traversant d'introduction de l'huile (22) du réservoir d'huile (13), rendant possible l'insertion de l'élément filtrant d'huile (9) dans le premier siège (8) du logement (5) de l'élément filtrant d'huile (9) respectivement à travers le deuxième conduit (18), la chambre (17) du corps creux (15) et le premier conduit (16), et rendant possible l'extraction de l'élément filtrant d'huile (9) du premier siège (8) du logement (5) de l'élément filtrant d'huile (9) respectivement à travers le premier conduit (16), la chambre (17) du corps creux (15) et le deuxième conduit (18) ;
le corps creux (15) est doté d'un quatrième conduit (39) qui part de la chambre (17) du corps creux (15) et qui est en communication avec l'extérieur du corps creux (15) ;
le corps creux (15) et le logement (28) de l'élément filtrant d'air (29) sont dimensionnés l'un par rapport à l'autre de manière à ce que : le logement (28) de l'élément filtrant d'air (29) puisse être inséré dans et extrait de la chambre (17) du corps creux (15) à travers le deuxième conduit (18) ; lorsque le logement (28) de l'élément filtrant d'air (29) est inséré dans la chambre (17) du corps creux (15), le logement (28) de l'élément filtrant d'air (29) peut être accouplé de façon amovible avec le corps creux (15) de manière à ce que l'entrée d'air (25) soit en communication avec le deuxième conduit (18), la sortie d'air (26) soit en communication avec le quatrième conduit (39) et la deuxième ouverture (30) soit en communication avec le deuxième conduit (18), permettant à l'élément filtrant d'air (29) d'être inséré dans le, et extrait du, deuxième siège (27) du logement (28) de l'élément filtrant d'air (29) à travers le deuxième conduit (18) ;
le groupe (3) comprend un conduit de dérivation (40) pour mettre le quatrième conduit (39) en communication de fluide avec la chambre (14) du réservoir d'huile (13) ;
le logement (28) de l'élément filtrant d'air (29) est doté d'un filetage extérieur ;
comprend un bouchon (20) pouvant être accouplé de façon amovible avec le logement (28) de l'élément filtrant d'air (29) de manière à accéder à l'élément filtrant d'air (29) lorsque ce même élément filtrant d'air (29) est disposé dans le logement (28) de l'élément filtrant d'air (29) ;
**caractérisé en ce que** :
le corps creux (15) est doté d'une vis mère au niveau de la chambre (17) du corps creux (15) pour l'accouplement avec le filetage extérieur, de manière à ce que le logement (28) de l'élément filtrant d'air (29) puisse être vissé et dévissé à et de la chambre (17) du corps creux (15) ;
le corps creux (15) et le logement (28) de l'élément filtrant d'air (29) sont réciproquement dimensionnés de manière à ce que lorsque le logement (28) de l'élément filtrant d'air (29) est accouplé avec le corps creux (15), le logement (28) de l'élément filtrant d'air (29) bouche le deuxième conduit (18).

2. Le groupe selon la revendication 1, dans lequel le quatrième conduit (39) est identifié dans le conduit de dérivation (40) et est réalisé dans le corps creux (15).

3. Un groupe vanne de régulation directionnelle (21), comprenant un groupe de filtration d'air et d'huile selon l'une quelconque des revendications précédentes, et une vanne de régulation directionnelle (21), la vanne de régulation directionnelle (21) étant fixée au corps creux (15) ou étant en corps unique avec le corps creux (15).
